# EUROPEAN PATENT APPLICATION

(11) **EP 4 844 908 A1**
(43) Date of publication of application: **25.11.2026**
(21) Application number: 25218770.3
(22) Date of filing: 26.11.2025
(51) Int. Cl.: H01M 50/20

(54) **BATTERY APPARATUS, ENERGY STORAGE SYSTEM, AND ELECTRICAL DEVICE**

(30) Priority: 20.05.2025 CN 202510655103
(71) Applicant: Zhejiang Jinko Energy Storage Co., Ltd., Jiaxing, Zhejiang (CN)
(72) Inventor: SHI, Yanyan, Haining (CN); LV, Yuanfu, Haining (CN); CHEN, Yuanhang, Haining (CN); ZHANG, Luhua, Haining (CN)
(74) Representative: Balder IP Law, S.L.

(57) **Abstract**

The present disclosure relates to the technical field of energy storage, and discloses a battery apparatus, an energy storage system, and an electrical device. The battery apparatus includes at least one battery cell module, a CCS module, and an isolation structure. The at least one battery cell module includes multiple battery cells arranged along a first direction, a first positioning member and a second positioning member configured for clamping the multiple battery cells therebetween, and a binding member configured to bind the multiple battery cells, the first positioning member, and the second positioning member together. Each respective battery cell of the multiple battery cells includes a top side and an opposing bottom side, and further includes cell poles and an explosion-proof valve on the top side. The CCS module is disposed on top sides of the multiple battery cells, and is electrically connected to the cell poles of the plurality of battery cells, with the explosion-proof valve being exposed. The isolation structure includes an isolation part covering on the top sides of the multiple battery cells, and a mounting part connected to the multiple battery cells. The battery apparatus, energy storage system, and electrical device provided in the present disclosure are beneficial to ensure the operation performance of the battery apparatus.

## Description

### TECHNICAL FIELD

The present disclosure relates to the technical field of energy storage, and in particular to a battery apparatus, an energy storage system and an electrical device.

### BACKGROUND

With the continuous development of new energy technologies, energy storage systems are being used increasing widely. An energy storage system uses a battery apparatus formed by individual battery cells to store electrical energy and output the electrical energy when needed. The individual battery cells have charge-discharge cycle characteristics, enabling them to switch between charging and discharging states. As a crucial component of the energy storage system, a performance of the battery apparatus directly affects the overall performance of the energy storage system.

### SUMMARY

To address the aforementioned technical problems, some embodiments of the present disclosure provide a battery apparatus, including a battery cell module, a CCS module, and an isolation structure. The at least one battery cell module 11 includes a plurality of battery cells disposed along a length direction of the battery apparatus; a first positioning member and a second positioning member configured for clamping the plurality of battery cells therebetween; and a binding member configured to bind the plurality of battery cells, the first positioning member, and the second positioning member together. Each respective battery cell of at least some of the plurality of battery cells includes a top side and an opposing bottom side, and further includes cell poles and an explosion-proof valve provided on the top side. The CCS module is disposed on top sides of the plurality of battery cells, and is electrically connected to the cell poles of the plurality of battery cells, with the explosion-proof valve being exposed. The isolation structure includes an isolation part covering on the top sides of the plurality of battery cells, and a mounting part connected to the plurality of battery cells. The isolation part is supported on the top sides of the plurality of battery cells via the mounting part, a space or accommodating the CCS module is formed between the top sides of the plurality of battery cells and the isolation structure.

Some embodiments of the present disclosure also provide an energy storage system. The energy storage system includes a housing and the aforementioned battery apparatus. The housing has a receiving cavity. The battery apparatus is disposed within the receiving cavity.

Some embodiments of the present disclosure also provide an electrical device, including the battery apparatus described above.

In the battery apparatus, energy storage system, and electrical device provided in some embodiments of the present disclosure, a CCS module and an isolation structure are disposed on the top sides of the plurality of battery cells in the at least one battery cell module. The isolation structure includes an isolation part and a mounting part. The isolation part and the mounting part are connected to each other. The isolation part is configured for covering the top sides of the plurality of battery cells for isolation, and the mounting part is configured for connecting to the plurality of battery cells. The isolation part is supported by the mounting part. The mounting part is connected to the plurality of battery cells to ensure a stability of the isolation part. Furthermore, the isolation structure being connected to the plurality of battery cells allows the isolation structure to bypass the CCS module and be mounted on the at least one battery cell module. A structure stability of the plurality of battery cells improves a reliability of the isolation structure, and avoids adverse effects on the CCS module. In this way, a safety of the battery apparatus during use can be ensured and a performance of the battery apparatus is improved.

In some embodiments, the mounting part includes a main body portion and a connecting portion that are connected to each other. The main body portion is configured to at least partially insert between every two battery cells of the plurality of battery cells. The connecting portion is integrally formed with the isolation part, or engaged with the isolation part. In this way, a connection between the mounting part and the plurality of battery cells can be achieved through the main body portion, and a connection between the mounting part and the isolation part can be achieved through the connecting portion.

In some embodiments, the CCS module includes a wiring isolation plate covering on the top sides of the plurality of battery cells. Via holes for exposing explosion-proof valves are defined on the wire isolation plate. The main body portion is disposed on a side of the wire isolation plate facing the plurality of battery cells, and the connecting portion passes through the wire isolation plate and is engaged with the isolation part. In this way, by providing the main body portion on the side facing the plurality of battery cells, it is easy to insert the main body portion between every two battery cells the plurality of battery cells, and a clamping force between two corresponding battery cells of the plurality of battery cells is used to fix the mounting part.

In some embodiments, the connecting portion and explosion-proof valves of two corresponding battery cells of the plurality of battery cells adjacent to the connecting portion are collinear. Via holes on both sides of the connecting portion on the wire isolation plate communicate with each other, and the connecting portion is between the explosion-proof valves of the two corresponding battery cells of the plurality of battery cells. In this way, the connecting portion can serve as isolation between the explosion-proof valves of the two corresponding battery cells of the plurality of battery cells, isolating any objects released by the explosion-proof valves.

In some embodiments, the main body portion may include an extension portion on at least one side of the main body portion. The extension portion extends in a direction parallel to the length direction, and the extension portion abuts against the top sides of the plurality of battery cells. In this way, a contact area between the mounting part and the plurality of battery cells is increased by contacting the extension portion and the top sides of the plurality of battery cells, thereby ensuring a stability when the mounting part is connected to the plurality of battery cells.

In some embodiments, the mounting part further includes a first portion and a second portion. The first portion and the second portion are disposed at both ends of the main body portion, respectively. Each of the first portion and the second portion abut against at least one of two corresponding battery cells of the plurality of battery cells. In this way, the plurality of battery cells can be engaged with the main body portion via the first and second portions at both ends of the main body portion, thereby liming a connection position of the mounting part.

In some embodiments, the connecting portion has a snap provided at an end of the connecting portion away from the main body portion, and a mounting hole is defined on the isolation part. The snap passes through the mounting hole and abuts on a side of the isolation part away from the plurality of battery cells. In this way, the isolation part can be easily mounted on the mounting part through fitting the snap with the mounting hole, thereby causing the isolation part and the plurality of battery cells form a whole.

In some embodiments, the connecting portion has a channel passing through the connecting portion along the length direction. This allows the channel in the connecting portion to form a path for guiding a flow of discharged materials, thereby improving the stability of the plurality of battery cell during use.

In some embodiments, the mounting part includes a plurality of connecting portions arranged at intervals on the main body portion. In this way, the number of fitting positions can be increased by using the plurality of connecting portions, thereby ensuring a tight connection between the plurality of connecting portions and the isolation part.

In some embodiments, the battery apparatus further includes a cell heat-insulation pad between every two battery cells of the plurality of battery cells, with at least a portion of the cell heat-insulation pad is spaced from the top sides of the plurality of battery cells by a space. This allows for the formation of a reserved space between every two battery cells of the plurality of battery cells through the cooperation of the cell heat-insulation pads, thereby facilitating the assembly of the main body portion.

In some embodiments, a maximum distance M between the portion of the cell heat-insulation pad and the top sides is a range from 5mm to 7mm. This ensures sufficient contact area between the mounting part and the plurality of battery cells, and guarantees sufficient clamping force between the plurality of battery cells and the mounting part, by controlling the maximum distance between the portion of the cell heat-insulation pad and the top side in a range from 5mm to 7mm.

In some embodiments, a distance between the main body portion and the portion of the cell heat-insulation pad is in a range from 0.2mm to 1mm. In this way, by control of the distance between the main body portion and the portion of the cell heat-insulation pad, interference therebetween is prevented and the assembly space between every two battery cells of the plurality of battery cells is effectively utilized.

In some embodiments, the isolation structure includes a plurality of mounting parts arranged at intervals along the length direction. This ensures the stability of the connection structure formed between the isolation part and the battery cell by providing the plurality of mounting parts.

### BRIEF DESCRIPTION OF THE DRAWINGS

One or more embodiments are exemplarily illustrated by the figures in the corresponding accompanying drawings; these exemplary illustrations do not constitute a limitation on the embodiments. Elements with the same reference numerals in the accompanying drawings denote similar elements, and unless otherwise specified, the figures in the accompanying drawings do not constitute scale limitations.
FIG. 1 is a three-dimensional schematic structural diagram of a battery apparatus provided in some embodiments of the present disclosure;
FIG. 2 is an enlarged schematic structural diagram of A in FIG. 1;
FIG. 3 is a schematic structural diagram of a battery apparatus provided in some embodiments of the present disclosure when an isolation part is not installed;
FIG. 4 is a schematic structural diagram of a wire isolation plate of a CCS module in a battery apparatus provided in some embodiments of the present disclosure;
FIG. 5 is a schematic structural diagram of a battery cell in a battery apparatus provided in some embodiments of the present disclosure;
FIG. 6 is a schematic diagram of a fitting structure of a battery cell and a mounting part of an isolation structure in a battery apparatus provided in some embodiments of the present disclosure;
FIG. 7 is a schematic diagram of a fitting structure of a cell heat-insulation pad and an isolation structure in a battery apparatus provided in some embodiments of the present disclosure;
FIG. 8 is a schematic structural diagram of a mounting part of an isolation structure in a battery apparatus provided in some embodiments of the present disclosure;
FIG. 9 is an enlarged structural diagram of B in FIG. 8;
FIG. 10 is a schematic structural diagram of a mounting part of an isolation structure in a battery apparatus provided in some embodiments of the present disclosure;
FIG. 11 is an enlarged schematic structural diagram of C in FIG. 10;
FIG. 12 is a schematic structural diagram of a mounting part of an isolation structure in a battery apparatus provided in some embodiments of the present disclosure;
FIG. 13 is an enlarged schematic structural diagram of D in FIG. 12;
FIG. **14** is a schematic diagram of a space between a top side of a battery cell and a cell heat-insulation pad in a battery apparatus provided in some embodiments of the present disclosure;
FIG. 15 is a schematic structural diagram of a cell heat-insulation pad in a battery apparatus provided in some embodiments of the present disclosure;
FIG. 16 is a schematic structural diagram of a cell heat-insulation pad in a battery apparatus provided in some embodiments of the present disclosure.

### DETAILED DESCRIPTION OF THE EMBODIMENTS

To make the objectives, technical solutions, and advantages of the embodiments of the present disclosure clearer, the various embodiments of the present disclosure will be described in detail below with reference to the accompanying drawings. However, those skilled in the art will understand that many technical details have been presented in the various embodiments of the present disclosure to enable readers to better understand the present disclosure. However, even without these technical details and various changes and modifications based on the following embodiments, the technical solutions claimed in the present disclosure can be implemented. The division of the various embodiments below is for the convenience of description and should not constitute any limitation on the specific implementation of the present disclosure. The various embodiments can be combined with and referenced by each other without contradiction.

Unless otherwise defined, all technical and scientific terms used herein have the same meaning as commonly understood by one of ordinary skill in the art to which The present disclosure pertains; the terminology used herein is for the purpose of describing particular embodiments only and is not intended to limit the application; the terms "comprising" and "having", and any variations thereof, in the specification, claims, and foregoing description of the drawings are intended to cover non-exclusive inclusion.

**In** the description of the embodiments of the present disclosure, unless otherwise expressly specified and limited, technical terms such as "installation", "connection", and "joining" should be interpreted broadly. For example, they can refer to a fixed connection, a detachable connection, or an integral part; they can refer to a mechanical connection or an electrical connection; they can refer to a direct connection or an indirect connection through an intermediate medium; they can refer to the internal communication of two components or the interaction between two components. Those skilled in the art can understand the specific meaning of the above terms in the embodiments of the present disclosure according to the specific circumstances.

As energy storage becomes increasingly important, a performance of an energy storage systems is receiving more and more attention. The energy storage systems use battery cells, i.e., individual battery cells, to assemble into modules, and then package the modules to form an electrochemical energy storage system. A plurality of battery cells can be assembled in series or parallel, and the resulting battery apparatus is assembled using a specific packaging method. The energy storage system can use one or more battery apparatuses; a certain number of battery apparatuses can form a battery cluster for unified management and control. The plurality of battery apparatuses can be packaged in a housing of a certain volume to form a battery pack, or can be packaged in a larger shipping container to form a containerized energy storage system. The plurality of battery apparatuses can be jointly managed and controlled through a battery management system and a thermal management system.

When assembling the plurality of battery cells, an isolation structure is typically designed for protection. For example, in a battery pack, a heat isolated plate above a Cell Connection System (CCS) module is a crucial isolation component. The heat isolated plate is generally made of mica and features thinned or semi-perforated section corresponding to an explosion-proof hole on a top side of a respective battery cell of the plurality of battery cells. In the event of thermal runaway, when high-temperature electrolyte erupts from inside a respective battery cell, it may escape through the thinned or semi-perforated section of the heat isolated plate. The heat isolated plate is configured for isolating the ejected electrolyte, preventing the thermal runaway from spreading and affecting other battery cells.

The design of the insulation components affects a performance and safety of the battery pack. In related technologies, a heat isolated plate is disposed on a top side of a respective battery cell and over the CCS module. The heat isolated plate has fastening holes, through which fasteners secure it to the CCS module. However, securing the heat isolated plate with the fasteners requires applying pressure and external force to penetrate an insulation plate (i.e., the heat isolated plate) and fix it in place. Improper operation, such as excessive force or inaccurate fastener placement, may easily cause mechanical damage to the underlying CCS module, such as squeezing or scratching, thereby affecting a performance and lifespan of the CCS module. Furthermore, the battery pack may experience various vibration environments in practical applications. Under such vibration, the fasteners may gradually loosen, leading to a decrease in a fixation effectiveness of the insulation plate, thereby resulting in the insulation plate failing to effectively perform its insulating function, or even causing the insulation plate to detach, threatening the safety of the CCS module and the entire battery pack. In addition, using clips for fixing requires individual operation, and each clip of the clips must be installed in place and securely, which requires operating space and skill. Compared to some other simple fixing methods, an installation process is more cumbersome and will reduce the assembly efficiency of the battery pack.

To improve safety and performance of the battery apparatus during use, some embodiments of the present disclosure provide a battery apparatus. An isolation structure in the battery apparatus is assembled via a mounting part fitted with the plurality of battery cells. During installation, the isolation part of the isolation structure may be supported above the CCS module by the mounting part. In this way, an installation of the isolation structure is simplified and adverse effects on the CCS module during installation can be avoided. Furthermore, the isolation structure being fitted with the battery cell improves stability of the isolation structure during installation.

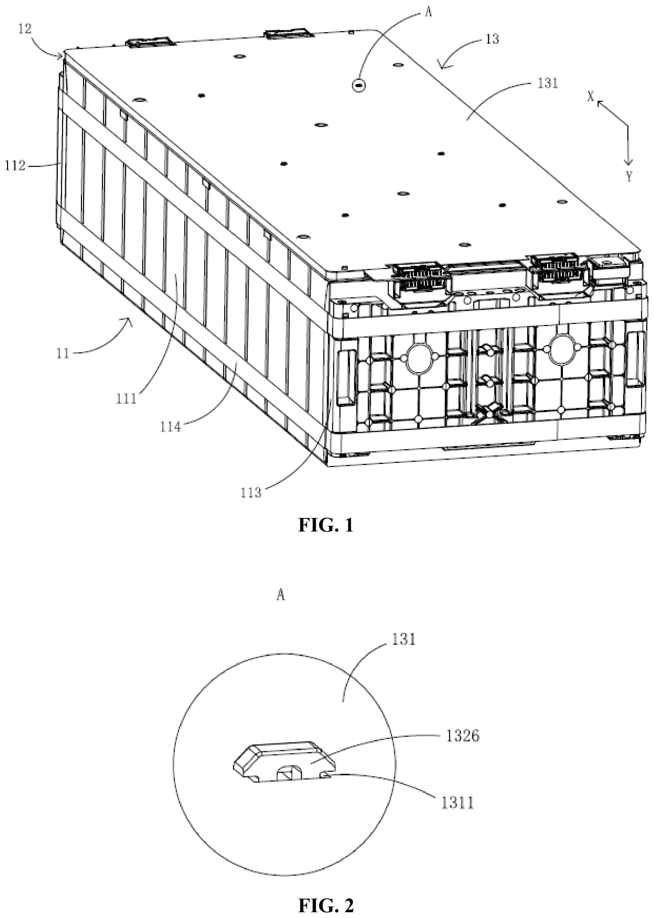

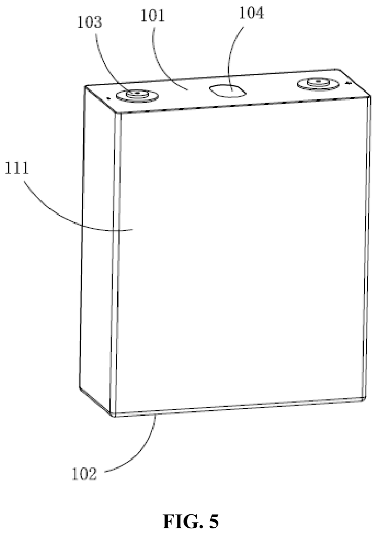

A structure of a battery apparatus provided in some embodiments of the present disclosure is described below with reference to FIGS. 1 to 16.

As shown in FIGS. 1 to 16, the battery apparatus provided in some embodiments of the present disclosure includes at least one battery cell module 11, a CCS module 12, and an isolation structure 13. The at least one battery cell module 11 includes a plurality of battery cells 111 disposed along a first direction (indicated by arrow X in FIG. 1); a first positioning member 112 and a second positioning member 113 configured for clamping the plurality of battery cells 111 therebetween; and a binding member 114 configured to bind the plurality of battery cells 111, the first positioning member 112, and the second positioning member 113 together. Each respective battery cell 111 of at least some of the plurality of battery cells 111 includes a top side 101 and an opposing bottom side 102 facing opposite directions parallel to a second direction (indicated by arrow Y in FIG. 1), and further includes cell poles 103 and an explosion-proof valve 104 on the top side 101. The second direction is perpendicular to the first direction. The CCS module 12 is disposed on top sides 101 of the plurality of battery cells 111, and is electrically connected to the cell poles 103 of the plurality of battery cells 111, with the explosion-proof valve 104 being exposed. The isolation structure 13 includes an isolation part 131 covering on the top sides 101 of the plurality of battery cells 111, and a mounting part 132 connected to the plurality of battery cells 111. The isolation part 131 is supported on the top sides 101 of the plurality of battery cells 111 via the mounting part 132, and a space for accommodating the CCS module 12 is formed between the top sides 101 of the plurality of battery cells 111 and the isolation structure 13.

Herein, the first direction refers to a length direction of the battery apparatus, and the second direction refers to a height direction of the respective battery cell 111 of the battery apparatus. Specifically, the second direction refers to a height direction of one battery cell 111.

The at least one battery cell module 11 is a key component of the battery apparatus that plays a crucial role in energy storage. The at least one battery cell module 11 is formed by assembling a plurality of battery cells 111 arranged along a length direction of the battery apparatus, to ensure structural stability after assembly. The battery apparatus may include one or more battery cell modules 11. As shown in FIG. 1, the battery apparatus has two rows of battery cells 111. The plurality of battery cells 111 may be square-shell secondary batteries, thereby achieving efficient space utilization and increasing a capacity of the battery apparatus. A heat-insulation pad is configured between every two battery cells 111 of the plurality of battery cells 111 arranged along the length direction. In this way, heat transfer along the length direction can be block by the heat-insulation pad, and thermal runaway in the plurality of battery cells 111 spreading to adjacent battery cells 111 of the plurality of battery cells 111 can be avoided. A heat-insulation pad is configured between every two rows of battery cells 111 to block heat transfer along a width direction of the battery apparatus.

The first positioning member 112 and the second positioning member 113 are configured for limiting movements of the plurality of battery cells 111, and may be in a form of an end plate. Different positioning members cooperate with the binding member 114 to fix the plurality of battery cells 111. The binding member 114 surrounds the plurality of battery cells 111, to bind the plurality of battery cells 111 and the different positioning members together to form a whole. The binding member 114 may be a strap, cable tie, or strapping strap. The at least one battery cell module 11 may include a plurality of binding members 114. In practice, the binding member 114 may be made of a high-strength steel strip.

Each respective battery cell 111 of at least some of the plurality of battery cells 111 includes a top side 101 and a bottom side 102 along a height direction of one battery cell 111, and further includes positive and negative cell poles 103 and an explosion-proof valve 104 on the top side 101. A positive cell pole 103 corresponds to a positive electrode of the respective battery cell 111, and a negative cell pole 103 corresponds to a negative electrode of the respective battery cell 111. The positive and negative cell poles 103 are configured for connecting to the energy storage system via connecting cables or connecting plates. The explosion-proof valve 104 corresponds to a pressure relief part of the respective battery cell 111, and is configured for forming a pressure relief channel under special cases to prevent safety hazards from occurring during the use of the respective battery cell 111.

The CCS module 12 is configured for connecting the plurality of battery cells 111 in series or parallel for current transmission. The CCS module 12 is also configured for acquiring operation data, such as acquiring temperature data of the plurality of battery cells 111 by using a thermistor, and acquiring voltage data of the plurality of battery cells 111, thereby facilitating monitoring of states of the plurality of battery cells 111. The CCS module 12 includes a data acquisition component. The data acquisition component is configured for connecting to the cell poles 103 on the top sides 101 of the plurality of battery cells 111 by using an aluminum bar. The aluminum bar may be soldered to the cell poles 103 of the plurality of battery cells 111 to collect operation data from the plurality of battery cells 111. The data acquisition component is also configured for transmitting acquired data from the plurality of battery cells 111 externally via cables. The data acquisition component is provided with connection interfaces to connect different battery apparatuses to an overall circuit.

The isolation structure 13 is disposed around the plurality of battery cells 111, thereby providing protection for the plurality of battery cells 111. The isolation structure 13 is configured for providing thermal insulation on an outer side of the at least one battery cell module 11. The isolation structure 13 is provided with a pressure relief structure at a position corresponding to the explosion-proof valves 104 on the top sides 101 of the plurality of battery cells 111. In this way, high-pressure gas or liquid can be released through the pressure relief structure in the event of thermal runaway in some of the plurality of battery cells 111, thereby preventing impact on other battery cells 111 of the plurality of battery cells 111.

The isolation structure 13 includes an isolation part 131 and a mounting part 132. The isolation part 131 is configured for covering on the top sides 101 of the plurality of battery cells 111 for isolation. An orthographic projection of the isolation part 131 along the second direction may extend beyond an outer side of the plurality of battery cells 111 to completely cover an area where the plurality of battery cells 111 are disposed. The mounting part 132 is configured for connecting to the plurality of battery cells 111 in the at least one battery cell module 11 by means of adhesion, clamping, or wrapping, and for supporting the isolation part 131 in a certain area on the top sides of the plurality of battery cells 111. The isolation part 131 is spaced from the top sides 101 of the plurality of battery cells 111 to avoid occupying or blocking an assembly area of the CCS module 12.

In practice, the isolation part 131 and the mounting part 132 is formed integrally or connected in a split structure to form an integral whole. The isolation part 131 is formed of a heat-insulation plate, which may be made of mica sheet. When thermal runaway occurs in some battery cells 111 of the plurality of battery cells 111, high-temperature electrolyte inside some battery cells 111 will be released through the explosion-proof valves 104. The released high-temperature electrolyte will break through the isolation part 131 and fall on a surface of the isolation part 131 away from the plurality of battery cells 111. Therefore, the isolation part 131 can play a role in isolation, reducing a phenomenon of high-temperature electrolyte falling onto other battery cells 111 of the plurality of battery cells 111 and causing thermal runaway to spread to the other battery cells 111. The isolation part 131 may include a thinned area or a semi-perforated pressure relief groove at a position corresponding to the explosion-proof valves 104 of the plurality of battery cells 111, so that released material can break through the isolation part 131.

In the battery apparatus provided in some embodiments of the present disclosure, a CCS module 12 and an isolation structure 13 are disposed on the top sides 101 of the plurality of battery cells 111 in the at least one battery cell module 11. The isolation structure 13 includes an isolation part 131 and a mounting part 132. The isolation part 131 and the mounting part 132 are connected to each other. The isolation part 131 is configured for covering on the top sides 101 of the plurality of battery cells 111 for isolation, and the mounting part 132 is configured for connecting to the plurality of battery cells 111. The isolation part 131 is supported via the mounting part 132. The mounting part 132 is connected to the plurality of battery cells 111 to ensure a stability of the isolation part 131. Furthermore, the isolation structure 13 being connected to the plurality of battery cells 111 allows the isolation structure 13 to bypass the CCS module 12 and be mounted on the at least one battery cell module 11. A structure stability of the plurality of battery cells 111 improves a reliability of the isolation structure 13, and avoids adverse effects on the CCS module 12. In this way, a safety of the battery apparatus during use can be ensured and a performance of the battery apparatus is improved.

In some embodiments, the mounting part 132 includes a main body portion 1321 and a connecting portion 1322 that are connected to each other. The main body portion 1321 is configured to at least partially insert between every two battery cells 111 of the plurality of battery cells 111. The connecting portion 1322 is integrally formed with the isolation part 131, or engaged with the isolation part 131.

In other words, a reserved assembly space may be formed between every two battery cells 111 of the plurality of battery cells 111, and the mounting part 132 is connected to the plurality of battery cells 111 by means of the reserved assembly space and the main body portion 1321 within the reserved assembly space. The main body portion 1321 is configured for fitting the mounting part 132 with the plurality of battery cells 111, and the connecting portion 1322 is configured for fitting the mounting part 132 with the isolation part 131. The main body portion 1321 is configured to partially or completely insert between every two battery cells 111 of the plurality of battery cells 111. In this way, the mounting part 132 is effectively fixed to the at least one battery cell module 11 through a squeezing action of two corresponding battery cells 111 of the plurality of battery cells 111on the main body portion 1321.

The connecting portion 1322 is a protruding structure formed on the main body portion 1321. The connecting portion 1322 may be integrally formed with the isolation part 131, or may be engaged with the isolation part 131. When it is necessary to ensure a connection strength between the connecting portion 1322 and the isolation part 131, the mounting part 132 and the isolation part 131 may be integrally formed. When it is required to improve an ease of installation of the isolation structure 13, the isolation part 131 may be fitted onto the mounting part 132 by means of clamping.

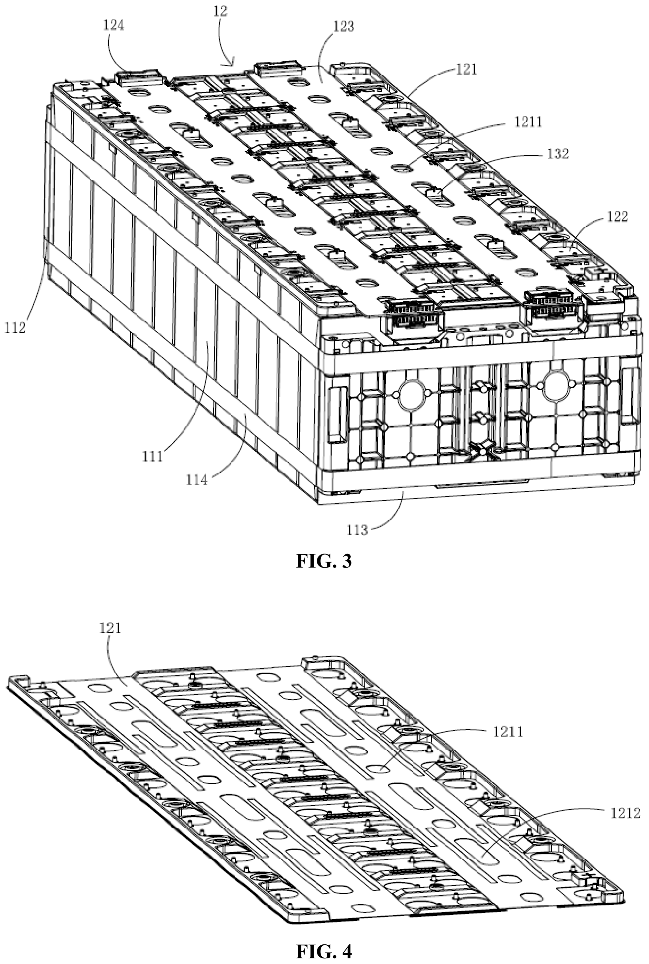

As shown in FIGS. 2 and 3, the CCS module 12 may include a wire isolation plate 121 covering on the top sides 101 of the plurality of battery cells 111. Via holes 1211 for exposing explosion-proof valves 104 are defined on the wire isolation plate 121. The main body portion 1321 is disposed on a side of the wire isolation plate 121 facing the plurality of battery cells 111, and the connecting portion 1322 passes through the wire isolation plate 121 and is engaged with the isolation part 131.

The wire isolation plate 121 serves as insulation on the top sides 101 of the plurality of battery cells 111 and provides a foundation for the arrangement of wires. The wire isolation plate 121 has a plurality of via holes 1211 at a position corresponding to the explosion-proof valves 104 of the plurality of battery cells 111 to create an avoidance space. A main body portion 1321 of the mounting part 132, which fits with a respective battery cell 111 of the plurality of battery cells 111, is disposed on a side of the wire isolation plate 121 facing the respective battery cell 111. The connecting portion 1322 passes through the wire isolation plate 121 and is engaged with the isolation part 131. By disposing the main body portion 1321 on the side of the wire isolation plate 121 facing the respective battery cell 111, the main body portion 1321 is connected to the respective battery cell 111. The wire isolation plate 121 can limit the main body portion 1321, effectively fixing the main body portion 1321 to the side of the wire isolation plate 121 facing the plurality of battery cells 111.

In practice, engagement may take various forms, such as a shaft-hole fit, a protrusion-groove fit, or a snap-and-slot fit. The wiring isolation plate 121 is configured for connecting and fixing to a positioning member on the outer side of the plurality of battery cells 111. Simultaneously, the wiring isolation plate 121 includes a tab 122 to connect the plurality of battery cells 111. The tab 122 is configured for connecting a connecting cable or connecting plate 123. The connecting plate 123 may include a connector 124 at an end of the connecting plate 123, to connect the battery apparatus to an overall circuit of the energy storage system. The tab 122 is limited by a guide post disposed on the wiring isolation plate 121.

In some embodiments, the wire isolation plate 121 may include a guide post thereon, and the isolation part 131 may include a guide hole . The guide post may pass through the guide hole, so that when the isolation structure 13 is installed, the isolation part 131 can be guided by cooperating the guide post and the guide hole. Furthermore, the guide post may have a snap provided at a top side of the guide post to limit the isolation part 131.

In some embodiments, the connecting portion 1322 and explosion-proof valves 104 of two corresponding battery cells 111 of the plurality of battery cells 111 adjacent to the connecting portion 1322 are collinear. Via holes on both sides of the connecting portion 1322 on the wire isolation plate 121 may communicate with each other, and the connecting portion 1322 is between the explosion-proof valves 104 of the two corresponding battery cells 111 of the plurality of battery cells 111.

In other words, the connecting portion 1322 may also serve as isolation for the at least one battery cell module 11. The connecting portion 1322 may form a separation in an area between the explosion-proof valves 104 of two corresponding cells 111 of the plurality of battery cells 111 corresponding to the wire isolation plate 121. Thus, the connecting portion 1322 may be used to prevent mutual interference between the two corresponding cells 111 of the plurality of battery cells 111.

As shown in FIG. 4, the wire isolation plate 121 has a corresponding via hole 1211 of the plurality of via holes 1211 for the explosion-proof valves 104 of the plurality of battery cells 111. At a position of the mounting part 132 corresponding to some of the plurality of battery cells 111, every two via holes 1211 of the plurality of via holes 1211 on the wire isolation plate 121 communicate with each other to form a large, racetrack-shaped hollow region 1212. The hollow region 1212 may expose the connecting portion 1322 of the mounting part 132, thereby allowing the wire isolation plate 121 to fit with the connecting portion 1322 of the mounting part 132 more conveniently. The connecting portion 1322 may be configured for isolation between the explosion-proof valves 104 of two corresponding battery cells 111 of the plurality of battery cells 111. In FIG. 4, the wire isolation plate 121 has six hollow regions 1212 corresponding to three mounting parts 132 having six connecting portions 1322. The connecting portion 1322 abuts against two longer edges opposite to the hollow region 1212 of the wire isolation plate 121, thereby disposing between the explosion-proof valves 104 of the two corresponding cells 111 of the plurality of battery cells 111 when every two via holes 1211 communicate with each other, thus playing an isolation role.

In some embodiments, the main body portion 1321 may include an extension portion 1323 on at least one side of the main body portion 1321. The extension portion 1323 extends along the first direction, and the extension portion 1323 abuts against the top sides 101 of the plurality of battery cells 111.

The extension portion 1323 may be formed on a side of the main body portion 1321 facing a respective battery cell 111 of the plurality of battery cells 111, or on both sides of the main body portion 1321 facing different battery cells 111 of the plurality of battery cells 111. The extension portion 1323 is disposed perpendicularly to the main body portion 1321. When the main body portion 1321 is inserted between every two battery cells 111 of the plurality of battery cells 111, and contacts a side of the two battery cells 111 of the plurality of battery cells 111 along a length direction of the battery apparatus, the extension portion 1323 may contact the top sides 101 of the plurality of battery cells 111. In this way, a fitting area between the mounting part 132 and the plurality of battery cells 111 is increased, and a stability between the mounting part 132 and the plurality of battery cells 111 is improved.

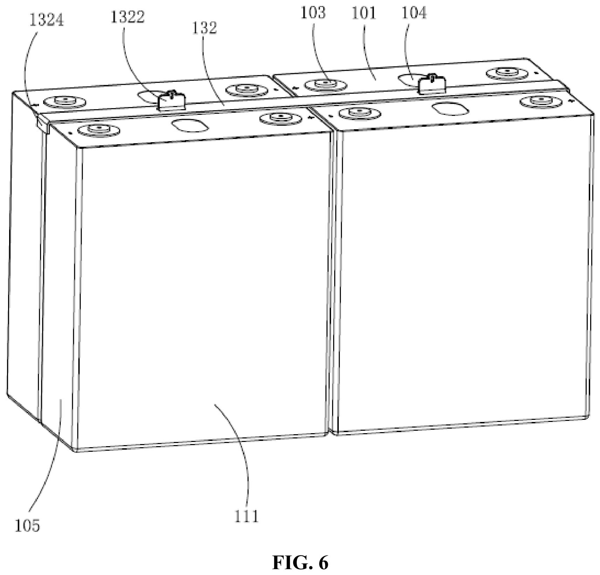

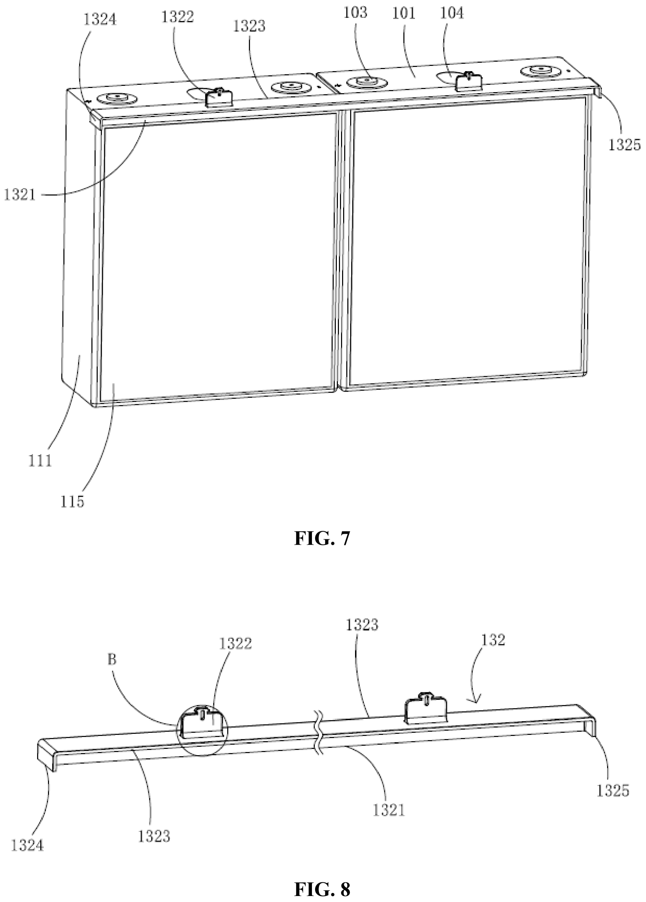

As shown in FIGS. 6 and 7, the mounting part 132 may further include a first portion 1324 and a second portion 1325. The first portion 1324 and the second portion 1325 are disposed at both ends of the main body portion 1321, respectively. Each of the first portion 1324 and the second portion 1325 abut against at least one of two corresponding battery cells 111 of the plurality of battery cells 111 along the first direction.

The first portion 1324 and the second portion 1325 are formed at both ends of the main body portion 1321, respectively. The first portion 1324 and the second portion 1325 are configured for limiting a fitting position of the mounting part 132 on a respective battery cell 111 of the plurality of battery cells 111. The first portion 1324 and the second portion 1325 may be in contact with an exposed side 105 along a width direction of the battery apparatus, thereby limiting a free movement of the mounting part along the width direction of the battery apparatus, and ensuring that the mounting part 132 is in a stable connection state.

When the main body portion 1321 of the mounting part 132 is inserted between every two battery cells 111 of the plurality of battery cells 111, and abuts against a side with a larger area of a respective battery cell 111 of the two battery cells 111 of the plurality of battery cells 111, the extension portion 1323, which is perpendicularly disposed to the main body portion 1321, abuts against top sides 101 of the two battery cells 111 of the plurality of battery cells 111. The first portion 1324 and the second portion 1325, which are disposed at both ends of the main body portion 1321 respectively, abut against a side with a smaller area of a respective battery cell 111 of the two corresponding battery cells 111 of the plurality of battery cells 111. In this way, the mounting part 132 can be in contact with surfaces of the respective battery cell 111 along three different directions, ensuring a tight connection between the mounting part 132 and the two corresponding battery cells 111 of the plurality of battery cells 111.

In some embodiments, the connecting portion 1322 has a snap 1326 provided at an end of the connecting portion 1322 away from the main body portion 1321, and a mounting hole 1311 is defined on the isolation part 131. The snap 1326 passes through the mounting hole 1311 and abuts on a side of the isolation part 131 away from the plurality of battery cells 111.

The snap 1326 includes a variable cross-sectional shape, which allows it to fit with the mounting hole 1311 to abut against the isolation part 131, thereby securely mounting the isolation part 131 onto the top of the plurality of battery cells 111. The connecting portion 1322 may be in the form of a base or a flat plate, with a platform structure or a platform-like structure formed on a side away from the main body portion 1321. After the main body portion 1321 and the plurality of battery cells 111 are fitted, the connecting portion 1322 is exposed at the top sides of the plurality of battery cells 111. The isolation part 131 may be directly snapped into the snap 1326 on the connecting portion 1322, thereby abutting against the platform structure on the connecting portion 1322. The snap 1326 is configured for limiting the isolation part 131 on a side away from the plurality of battery cells 111, firmly fixing the isolation part 131 to the top sides of the plurality of battery cells 111. In practice, the snap 1326 may pass through the mounting hole 1311 through slight plastic deformation during engagement, or through elastic deformation.

In addition to connecting the mounting part 132 and the isolation part 131 via a snap-fit structure, a steel strip (i.e., a binding member 114) may be added to a periphery of the battery apparatus. The steel strip is configured to bind the plurality of battery cells 111 and the isolation structure 13 around an arrangement direction of the plurality of battery cells 111, thereby enhancing the stability of the fit between the isolation structure 13 and the plurality of battery cells 111. In some embodiments, in addition to disposing the isolation part 131 on the top of the plurality of battery cells 111, isolation parts 131 may also be disposed on a bottom side of the plurality of battery cells 111 and disposed on both sides of the plurality of battery cells 111. That is, four isolation parts 131 may be arranged disposed around the plurality of battery cells 111, and the different isolation parts 131 may be engaged or fixedly connected, thereby providing isolation in different directions for the plurality of battery cells 111.

In some embodiments, the connecting portion 1322 includes a channel 1327 passing through the connecting portion along the first direction.

The channel 1327 is configured for forming a path for gas to pass through. The channel 1327 is configured for connecting two sides of the connecting portion 1322 facing different battery cells 111 of the plurality of battery cells 111, thereby guiding the gas through and forming a pressure relief channel 1327. In practice, a through-hole structure connected to a side of the isolation part 131 away from the plurality of battery cells 111 may be provided in the connecting portion 1322, thereby guiding vented materials to a side of the isolation structure 13 away from the plurality of battery cells 111. In some embodiments, a region where the channel 1327 is formed may extend beyond a plane where the isolation part 131 is formed, extending to a side of the isolation part 131 away from the plurality of battery cells 111.

It should be noted that, in order to effectively prevent mutual interference between every two battery cells 111 of the plurality of battery cells 111, the channel 1327 may not be provided on the connecting portion 1322. In this way, a barrier structure is formed between every two battery cells 111 of the plurality of battery cells 111 through the connecting portion 1322, thereby effectively isolating the space on both sides of the connecting portion 1322.

In some embodiments, the mounting part 132 includes a plurality of connecting portions 1322 arranged at intervals on the main body portion 1321.

The plurality of connecting portions 1322 are formed on the main body portion 1321, thereby the mounting part 132 and the isolation part 131 can be engaged in multiple different positions, thereby ensuring a stability of the connection between the isolation part 131 and the mounting part 132.

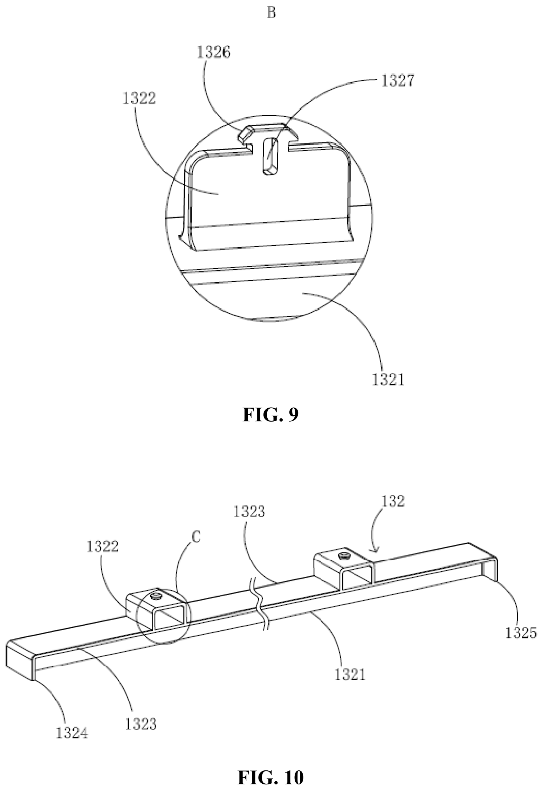

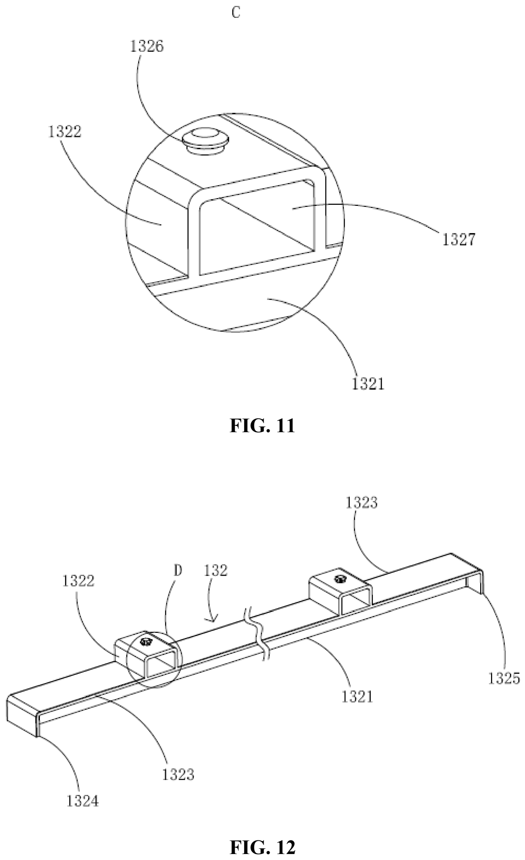

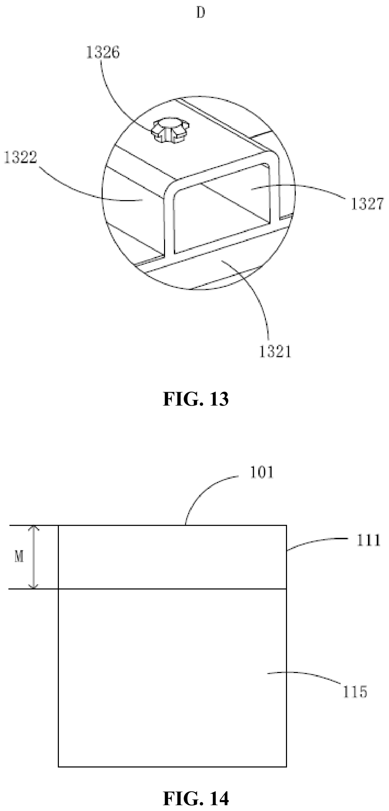

As shown in FIGS. 8 and 9, the main body portion 1321 may have two connecting portions 1322. The two connecting portions 1322 may connect the isolation part 131 at their corresponding positions, thereby improving a tightness of connection between the isolation part 131 and the plurality of mounting parts 132. Each respective connecting portion 1322 of at least some of the two connecting portions 1322 may have a snap 1326, and a corresponding isolation part 131 of the heat-insulation plate may have a mounting hole 1311. The snap 1326 is configured for clamping and limiting the isolation part 131. The snap 1326 may be umbrella-shaped. The snap 1326 may have a head shape of a straight line as shown in FIGS. 8 and 9, a circle as shown in FIGS. 10 and 11, or a cross shape as shown in FIGS. 12 and 13.

As shown in FIG. 7, the battery apparatus may further include a cell heat-insulation pad 115 disposed between every two battery cells 111 of the plurality of battery cells 111 along the first direction, and at least a portion of the cell heat-insulation pad 115 is spaced from the top sides 101 of the plurality of battery cells 111 by a space.

The cell heat-insulation pad 115 is filled on a side of the plurality of battery cells 111 along the length direction, i.e., a side with a larger area. The cell heat-insulation pad 115 may block heat transfer on one or both sides of the plurality of battery cells 111. The cell heat-insulation pad 115 partially spaces from the top sides 101 of the plurality of battery cells 111 by a space, so that the main body portion 1321 of the mounting part 132 can be inserted between every two battery cells 111 of the plurality of battery cells 111, to realize the connection between the mounting part 132 and the plurality of battery cells 111.

In practice, as shown in FIG. 14, a maximum distance M between the portion of the cell heat-insulation pad 115 and the top sides 101 of the plurality of battery cells 111 may be in a range from 5mm to 7mm.

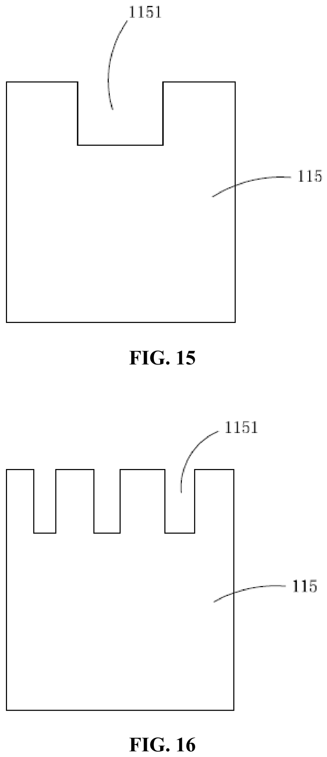

In other words, the portion of the cell heat-insulation pad 115 spaces from the top sides 101 of the plurality of battery cells 111 by a certain distance in a range from 5mm to 7mm. For example, the maximum distance M may be 5mm, 5.5mm, 6mm, 6.5mm, or 7mm. In practice, a distance between the portion the cell heat-insulation pad 115 and the top sides 101 of the plurality of battery cells 111 may be controlled by cutting material only in a certain region of the cell heat-insulation pad 115. For example, the cell heat-insulation pad 115 may have an inwardly recessed groove 1151 m, as shown in FIGS. 15 and 16, and the cell heat-insulation pad 115 may have one or more grooves 1151. In some embodiments, the cell heat-insulation pad 115 may be cut along the width direction of the battery apparatus, that is, a top side of the cell heat-insulation pad 115 may be completely removed.

In some embodiments, a distance between the main body portion 1321 and the portion of the cell heat-insulation pad 115 is in a range from 0.2mm to 1mm.

The distance between the main body portion 1321 and the cell heat-insulation pad 115 are controlled to form a spacing, thereby interference between them can be avoided. In practice, the distance between the main body portion 1321 and the portion of the cell heat-insulation pad 115 may be 0.2 mm, 0.3 mm, 0.4mm, 0.5mm, 0.6mm, 0.7mm, 0.8mm, 0.9mm, or 1mm.

In some embodiments, the isolation structure 13 includes a plurality of mounting parts 132 s arranged at intervals along the first direction.

The plurality of mounting parts 132 are disposed along an arrangement direction of the plurality of battery cells 111. The plurality of mounting parts 132 may be connected with some of the plurality of battery cells 111, providing a basis for connection between the isolation part 131 and the plurality of battery cells 111. In practice, the isolation structure 13 may include two, three, four, or more mounting parts 132. By increasing the number of the plurality of mounting parts 132, the connection stability between the isolation part 131 and the plurality of battery cells 111 can be ensured, enabling the isolation part 131 to better perform its isolation function.

In some embodiments, the isolation structure 13 may include a plurality of isolation parts 131 disposed along the arrangement direction of the plurality of battery cells 111. The plurality of isolation parts 131 are provided in one-to-one correspondence with the plurality of mounting parts 132. Each respective isolation part 131 of at least some of the plurality of isolation parts 131 may fit with its corresponding mounting part 132 of the plurality of mounting parts 132. For example, when the isolation structure 13 includes three mounting parts 132, it may also include three isolation parts 131. The plurality of isolation parts 131 are spliced together on the top sides of the plurality of battery cells 111 to form a complete isolation plate structure. In some embodiments, every two isolation parts 131 may be clamped at a splicing point or form a stacked structure. This enhances tightness of connection between the plurality of isolation parts 131, thereby ensuring the overall stability of the isolation structure 13.

The mounting part 132 forming a mounting structure is connected to the heat-insulation plate forming the isolation part 131, to be formed integrally (such as injection molding), or to be connected in a split structure. The mounting part 132 is configured to insert into the assembly space to fit with the plurality of battery cells 111, and fits with the isolation part 131 via an opening on the wire isolation plate 121 of the CCS module 12.

The mounting part 132 may be configured independently, such as configured as an injection molded part. The mounting part 132 is mounted in the assembly space between every two battery cells 111 of the plurality of battery cells 111. In the at least one battery cell module 11, the assembly space may be formed by the cell heat-insulation pad 115 between every two battery cells 111 of the plurality of battery cells 111. By utilizing the assembly space, the mounting part 132 corresponding to the isolation structure 13 may be mounted easily, thereby realizing the installation of the isolation structure 13 without fasteners, saving a drilling operation of fasteners. When the assembly space is formed between every two battery cells 111 of the plurality of battery cells 111, a clamping force between two corresponding battery cells 111 of the plurality of battery cells 111 may be used to fix the corresponding mounting structure, which effectively improves the reliability of the heat-insulation plate.

By providing an injection-molded mounting structure within the assembly space, rigidity can be improved, thereby ensuring a reliable fixation of the heat-insulation plate. Furthermore, by using the cell heat-insulation pad 115 to create the required assembly space, the overall space becomes more compact. When the opening on the CCS module 12 exposes the two explosion-proof valves 104, the mounting structure including the heat-insulation plate may be used to block the two explosion-proof valves 104. When the plurality of connecting portion 1322 of the mounting part 132 is not unevenly arranged, it may serve a positioning function during the installation of the isolation part 131, making it less likely to be installed incorrectly. The positive and negative markings on the isolation part 131 can precisely correspond to the positive and negative lead-out structures of the battery apparatus, making installation and positioning more convenient.

Some embodiments of the present disclosure further provide an energy storage system, including a housing and the aforementioned battery apparatus. The housing has a receiving cavity. The battery apparatus is disposed within the receiving cavity.

Energy storage systems can adopt cabin-level energy storage, cluster-level energy storage, and pack-level energy storage according to different application scenarios. Individual battery cells (cells) can be connected in series or parallel to form modules. An energy storage system can use one or more battery apparatuses, and a certain number of battery apparatuses can be managed and controlled uniformly. A plurality of battery apparatuses can be packaged in a container of a certain volume to form a battery pack, or can be packaged in a larger shipping container to form a containerized energy storage system. The plurality of battery apparatuses can be jointly managed and controlled through a battery management system and a thermal management system.

By designing the isolation structure 13 in the battery apparatus, its assembly can be simplified and the connection stability of the isolation structure 13 after assembly can be improved. The CCS module 12 in the battery apparatus can be prevented from being influenced, thereby ensuring the operating performance of the battery apparatus.

Some embodiments of the present disclosure further provide an electrical device including the aforementioned battery apparatus.

The electrical device may be everyday consumer goods, industrial products, or other devices provided with battery apparatuses that use electrochemical energy storage as their energy source.

Those skilled in the art will understand that the above implementations are specific embodiments of the present disclosure, and in practical applications, various changes can be made in form and detail without departing from the scope of the present disclosure.

## Claims

1. A battery apparatus, **characterized by** comprising:
at least one battery cell module (11) including a plurality of battery cells (111) disposed along a length direction (X) of the battery apparatus, a first positioning member (112) and a second positioning member (113) configured for clamping the plurality of battery cells (111) therebetween, and a binding member (114) configured to bind the plurality of battery cells (111), the first positioning member (112), and the second positioning member (113) together, wherein each respective battery cell (111) of at least some of the plurality of battery cells (111) includes a top side (101) and an opposing bottom side (102), and further includes cell poles (103) and an explosion-proof valve (104) provided on the top side (101);
a CCS, module (12) disposed on top sides (101) of the plurality of battery cells (111), wherein the CCS module (12) is electrically connected to the cell poles (103), with the explosion-proof valve (104) being exposed; and
an isolation structure (13) including an isolation part (131) covering on the top sides (101) of the plurality of battery cells (111) and a mounting part (132) connected to the plurality of battery cells (111), wherein the isolation part (131) is supported on the top sides (101) of the plurality of battery cells (111) via the mounting part (132), and a space for accommodating the CCS module (12) is formed between the top sides (101) of the plurality of battery cells (111) and the isolation structure (13).

2. The battery apparatus according to claim 1, wherein the mounting part (132) includes a main body portion (1321) and a connecting portion (1322) that are connected to each other, the main body portion (132) is configured to at least partially insert between every two battery cells (111) of the plurality of battery cells (111), and the connecting portion (1322) is integrally formed with the isolation part (131), or the connecting portion (1322) is engaged with the isolation part (131).

3. The battery apparatus according to claim 2, wherein the CCS module (12) includes a wire isolation plate (121) covering on the top sides (101) of the plurality of battery cells (111), via holes (1211) for exposing explosion-proof valves (104) are defined on the wire isolation plate (121), the main body portion (1321) is disposed on a side of the wire isolation plate (121) facing the plurality of battery cells (111), and the connecting portion (1322) passes through the wire isolation plate (121) and is engaged with the isolation part (131).

4. The battery apparatus according to claim 3, wherein the connecting portion (1322) and explosion-proof valves (104) of two corresponding battery cells (111) of the plurality of battery cells (111) adjacent to the connecting portion (1322) are collinear, via holes (1211) on both sides of the connecting portion (1322) on the wire isolation plate (121) communicate with each other, and the connecting portion (1322) is between the explosion-proof valves (104) of the two corresponding battery cells (111) of the plurality of battery cells (111).

5. The battery apparatus according to any one of claims 2 to 4, wherein the main body portion (1321) includes an extension portion (1323) on at least one side of the main body portion (1321), the extension portion (1323) extends along the length direction (X), and the extension portion (1323) abuts against the top sides (101) of the plurality of battery cells (111).

6. The battery apparatus according to claim 5, wherein the mounting part (132) further includes a first portion (1324) and a second portion (1325) that are disposed at both ends of the main body portion (1321) respectively, and each of the first portion (1324) and the second portion (1325) abuts against at least one of two corresponding battery cells (111) of the plurality of battery cells (111).

7. The battery apparatus according to any one of claims 2 to 6, wherein the connecting portion (1322) has a snap (1326) provided at an end of the connecting portion (1322) away from the main body portion (1321), a mounting hole (1311) is defined on the isolation part (131), and the snap (1326) passes through the mounting hole (1311) and abuts on a side of the isolation part (131) away from the plurality of battery cells (111).

8. The battery apparatus according to any one of claims 2 to 7, wherein the connecting portion (1322) has a channel (1327) passing through the connecting portion (1322) along the length direction (X).

9. The battery apparatus according to any one of claims 2 to 8, including a plurality of connecting portions (1322) arranged at intervals on the main body portion (1321).

10. The battery apparatus according to any one of claims 2 to 9, further including a cell heat-insulation pad (115) disposed between every two battery cells (111) of the plurality of battery cells (111), and at least a portion of the cell heat-insulation pad (115) is spaced from the top sides (101) of the plurality of battery cells (111) by a space.

11. The battery apparatus according to claim 10, wherein a maximum distance between the portion of the cell heat-insulation pad (115) and the top sides (101) is in a range from 5mm to 7mm.

12. The battery apparatus according to claim 11, wherein a distance between the main body portion (1321) and the portion of the cell heat-insulation pad (115) is in a range from 0.2mm to 1mm.

13. The battery apparatus according to claim 1, including a plurality of mounting parts (132) arranged at intervals along the length direction (X).

14. An energy storage system, including:
a housing having a receiving cavity; and
the battery apparatus according to any one of claims 1 to 13, wherein the battery apparatus is disposed within the receiving cavity.

15. An electrical device, including the battery apparatus according to any one of claims 1 to 13, or the energy storage system according to claim 14.
